# EUROPEAN PATENT APPLICATION

(11) **EP 4 799 485 A1**
(43) Date of publication of application: **02.09.2026**
(21) Application number: 25160844.4
(22) Date of filing: 28.02.2025
(51) Int. Cl.: A23B 2/30, A23B 2/708, A23B 7/005, A23B 7/148, A23L 19/00

(54) **PRODUCT COMPRISING ENTIRE COCONUT ENDOSPERM AND METHOD FOR PRESERVING ENTIRE COCONUT ENDOSPERM**

(71) Applicant: Adamskiy, Mikhail, 3013 Santa Fe (AR)
(72) Inventor: Adamskiy, Mikhail, 3013 Santa Fe (AR)
(74) Representative: RVDB

(57) **Abstract**

The subject-matter of the present invention relates to a product comprising an entire coconut endosperm, said entire coconut endosperm is packed into an artificial flexible hermetic package inside which vacuum or rarefaction is provided, wherein the surface of the coconut endosperm is covered with a natural oil film of coconut oil exuded in the result of thermal processing of coconut oil.

## Description

### TECHNICAL FIELD

. The present invention relates to preservation methods of an entire solid coconut endosperm, as well as to products obtained by the disclosed methods.

### BACKGROUND ART

. A mature coconut shelled from the shell (mesocarp) in the form of a white sphere (endosperm) packed into a hermetic transparent package is a very attractive product both for consumers and suppliers, for the following reasons:

. The consumer gets a ready for use product that does not require further shelling, which is a laborious and traumatic operation at home;

. The product possesses high consumer properties from the point of view of its using for culinary purposes and eating directly, as it combines the entire natural enclosure (endosperm) and an artificial package, thus maintaining the original freshness of the coconut meat and coconut water;

. The product possesses a stable quality compared to a non-shelled coconut, the defects of which remain hidden till the moment of shelling by the consumer;

. Due to a hermetic package the product is not exposed to the adverse effect of the environment during long transportation and storage;

. The color of the coconut meat seen through the transparent hermetic package is a visual indicator of product freshness;

. The product has a smaller weight and volume compared to a non-shelled coconut, and this positively affects transportation costs.

. As far as we know, a fresh entire coconut endosperm packed into a hermetic package can be stored no longer than 45 days. Considering the shipping time of the product from the site of manufacturing to outlets and consumers in distant countries, the storage period of the product containing an entire coconut endosperm is critical. To increase the term of sales of the product in importing countries, suppliers have to use air freight, which is faster than sea freight, but more expensive, which adversely affects the consumer price of the product.

. Thus, the technical task of prolongation of the storage period of an entire coconut endosperm packed into a hermetic package is relevant.

. A fresh coconut endosperm without the shell and the brown peel (testa), containing substantially water and oil, is susceptible to biodegradation, particularly due to oxidation by air oxygen and (or) due to the effect of microorganisms. Moreover, degenerative chemical and biological processes in the endosperm are triggered once the coconut is shelled and peeled away from the brown peel, and they are irreversible regardless of further technological operations like washing, drying, vacuum packing or packing in a gas medium. These degenerative processes adversely affect both the total storage period of the product and its flavor and organoleptic properties.

. The processes described above are enhanced by tropical climate conditions, in which the manufacturing process is held.

. The problem of prolongation of the storage period of an entire coconut endosperm can be solved by its thermal processing. From the background art methods of pasteurisation, sterilization, ultrapasteurisation of alimentary products are known, which provide a significant prolongation of their storage time.

. From the background art a method of long-term preservation of coconut is known (publication of the invention CN1057161, 1991-12-25,

UNIV ZHONGSHAN), according to various aspects of which a fresh coconut endosperm (meat) is subject to a short-time thermal effect in the range from 70 to 142 degrees Celsius, further it is cut into small pieces, dried and packed. Said solution cannot be used for the purpose of a long-term preservation of an entire endosperm, due to the following adverse effects:

. At a temperature higher than 100 degrees Celsius, depending on the time period of the thermal effect, coconut endosperms may explode, while the percentage of rejects is proportional to the temperature and duration of the thermal effect;

. The direct thermal effect onto the coconut endosperm, particularly by hot steam, leads to changes of natural meat properties and respectively to deterioration of gustatory qualities, what is indicated particularly in the publication of the application for the invention US2004071846.

. A method for preserving an entire coconut meat containing water is known (publication of the application for the invention US2004071846, 15-04-2004, DE LA MORA Y DE LA MORA ALEJANDRO EDUARDO), in accordance to which an entire fresh coconut is frozen, peeled off to the white meat, then washed and disinfected in sodium hypochlorite or calcium hypohchlorite, as well as exposed to ultraviolet radiation, then the processed coconut meat is packed at high vacuum.

. The claimed technical result of this solution is providing storage of an entire white coconut meat up to 90 days at a temperature from 0 to 2 degrees Celsius.

. The drawbacks of this method of
US2004071846 application publication are:
. Complexity of technological equipment needed for washing and disinfection of the entire white coconut meat;
. Operations carried out at the washing and disinfection stage do not exclude the effect of the external environment onto the coconut meat, and particularly of adverse air oxygen.

. A peeled coconut is known (publication of the invention application CN108516214, 11.09.2018, YIMAYILU HAINAN ARTIFICIAL INTELLIGENCE CO LTD, HAIKOU DUOHAO FOOD CO LTD), according to which the peeled coconut is produced in the following way: the coconut is frozen, then the meat is shelled, then the entire coconut meat containing water is placed in an artificial hermetic cover; for example, the in transparent shrink-wrap, then the packing is vacuumed, and then the obtained product is sterilized.

. The technical result of the invention CN108516214 consists in facilitation of coconut meat consumption, at the same time in the description it is specified that the product obtained in accordance with the invention has storage time up to 6 months.

. A meaningful drawback of the invention CN108516214 is the use of freezing, which leads to destruction of coconut meat fibers as well as coconut endosperm deformation, and this adversely affects gustatory and organoleptic properties of the product.

. This solution is a prototype of the present invention, it also includes stages of packing of the entire peeled coconut meat in a hermetic package and further thermal processing of the packed product.

. At the same time, publication CN108516214 of the invention does not disclose features of thermal processing (sterilization), while temperature values and duration of the thermal effect considerably impacts the storage time of the product, its gustatory qualities, and factors of rejects.

### SUBSTANCE OF THE INVENTION

. The goal of the present disclosure is prolongation of the storage period of an entire coconut endosperm with a maximum preservation of its natural flavor and organoleptic properties, relative simplicity of the technological process and a low rate of rejections.

. The inventive step of the present invention consists in a non-obvious technical effect which becomes apparent as the result of temperature effect on the coconut endosperm packed into a flexible hermetic package and which positively affects the storage period of the product comprising the entire coconut endosperm.

. This effect consists in exudation of the coconut oil on the outer surface of the coconut endosperm placed into a hermetic package, as a result of the temperature effect, while in conditions of vacuum or rarefied protective atmosphere the oil evenly distributes under the cover of the package forming a protective oil film.

. From the prior art, the use of vegetable oil (oil film) as a preservative is known and obvious.

. From the prior art waxing of coconut endosperms before packing is also known, as the result of this on the coconut surface a protective film is formed, however, the oil film formed on the surface of the coconut endosperm packed into a hermetic package due to the thermal effect has the following advantages:

. There is no need for additional technical equipment and a protective composition itself, e.g., wax;

. The process of thermal processing and creation of the oil film is carried out in a single technological process;

. The process of film formation is carried out in vacuum conditions or in a rarefied modified gas medium, i.e., in absence of the influence of external air oxygen and other negative factors of the environment;

. Due to vacuum or rarefaction of the medium inside the package an injection effect is provided when the exuded oil fills voids between the package and the coconut endosperm.

. Thus, one of subject matters of the present invention is a product comprising an entire coconut endosperm packed into an artificial flexible hermetic package inside which vacuum or rarefaction is provided, wherein the coconut endosperm surface is covered with a natural oil film of coconut oil exuded in the result of thermal processing according to methods disclosed herein.

. The technical result according to said object consists in providing a solid coconut endosperm packed into a hermetic package with a shelf life extended for more than 6 months when storage conditions from 2 to 15 degrees Celsius are provided.

. Formation of the protective oil film substantially depends on the thermal effect conditions. At the same time, it is obvious that high temperature and long thermal influence adversely affect natural properties of the coconut meat, as well as coconut water, and can lead to cracking and (or) explosion of the coconut endosperm, i.e. to a reject.

. Due to this, the next aspect of the present invention is a method of preservation of an entire solid coconut endosperm, including a stage of thermal effect on the coconut endosperm packed into a hermetic package, in the result of which on the surface of the coconut endosperm a protective oil film is formed, while the meat (copra), as well as coconut water contained inside the endosperm, preserve natural properties for consumers as much as possible.

. The method of preservation of the entire coconut endosperm according to the invention contains the following stages:
. Selecting a mature coconut without visible defects;
. Removing the hard shell from the coconut and extraction of the entire coconut endosperm;
. Removing the brown peel from the coconut endosperm;
. Washing and drying and (or) dedusting of the coconut endosperm;
. Packing of the coconut endosperm into a hermetic package with vacuum or rarefied modified gas medium provided inside;
. Carrying out thermal processing of the packed coconut endosperm in a heater at a pressure not higher than 3.5 atmospheres and a temperature from 70 to 145 degrees Celsius during from 5 to 60 minutes, while thermal processing time is chosen within the range from 5 to 60 minutes, considering that thermal processing time is a function of temperature with inverse proportion. Thus, in the process of thermal processing according to the described method, on the surface of the coconut endosperm coconut oil exudes and a protective oil film is formed.
. When the mode of thermal effect onto the packed coconut endosperm is chosen, the following factors must be taken into consideration in the heater:
. When heated, oil on the surface of the coconut endosperm exudes without external pressure, so the technical result according to the present invention can be obtained when atmospheric pressure or close to atmospheric pressure is provided;
. A pressure higher than 3,5 atmospheres significantly increases rejections of the production due to cracking or explosion of the coconut endosperm;
. Oil on the surface of the coconut endosperm starts to exude at a temperature in the heater higher than 70 degrees Celsius, however, a stable effect consisting in oil film formation is observed at a temperature higher than 85 degrees Celsius;
. At a temperature higher than 145 degrees Celsius coconut meat fibers start to brake down, at the same time the ratio of cracking and explosion of coconut endosperms grows significantly.

. A long temperature effect longer than 60 min at a temperature higher than 70 degrees Celsius leads to destruction of meat fibers and water release.

. An additional effect according to the present disclosure is improving of the coconut water aroma, which becomes apparent in the result of the thermal effect in the heater at a temperature higher than 70 degrees Celsius during more than 10 minutes, wherein the aroma becomes "milkier".

. Yet one effect discovered by the author, which favorably influences the increase of the storage period of the coconut endosperm packed into a hermetic package, is keeping the brown peel (testa), which covers the coconut endosperm. Although the protective function of the natural coating in the form of the brown peel (testa) is obvious, it should be noted that the coconut endosperm, after the hard shell as well as the brown peel are removed, for some period of time, i.e. before the packing stage, is in contact with the air oxygen, as well as it is subject to mechanical impacts during washing, drying and afterwards till it is packed. Thus, the brown peel creates a barrier between the coconut meat and the external environment, impeding activation of oxidation processes in the coconut meat from the moment of removing the hard shell from the coconut and till packing the coconut endosperm.

. At the same time, in the result of the thermal processing of the coconut endosperm covered with the brown peel and packed into a hermetic package, the brown peel detaches from the meat. Thus, keeping the brown peel (testa) in the disclosed method practically does not influence the facility of consuming a ready product by the consumer compared to a product in the production of which the brown peel was detached before the packing stage.

. Due to this, another subject matter of the present invention is a product comprising an entire coconut endosperm fully or partially covered with the brown peel, packed into an artificial flexible hermetic package inside which vacuum or rarefaction is provided, wherein the coconut endosperm meat is covered with a natural oil film of coconut oil exuded in the result of thermal processing.

. The technical result provided by said solution also consists in prolongation of the product storage period for more than 6 months provided that storage temperature is from 2 to 15 degrees Celsius.

. Due to this, according to another embodiment of the invention, the method of fresh coconut endosperm preservation comprises the following steps:
. Selecting a mature coconut without visible defects;
   . Removing the hard shell from the coconut keeping the brown peel and extraction of the entire coconut endosperm with the brown peel;
   . Washing and drying and (or) dedusting of the coconut endosperm with the brown peel;
   . Packing of the coconut endosperm with the brown peel into a hermetic package with vacuum or rarefied modified gas medium provided inside;
   . Carrying out thermal processing of the packed coconut endosperm in a heater at a pressure not higher than 3.5 atmospheres and a temperature from 70 to 145 degrees Celsius during from 5 to 60 minutes, during which the brown peel fully or partially detaches from the surface of the coconut endosperm, and on the surface of the coconut endosperm coconut oil exudes and the protective oil film is formed.
   . Due to this, according to another embodiment of the invention, the method of entire coconut endosperm preservation comprises the following steps:
. Selecting a mature coconut without visible defects;
. Removing the hard shell from the coconut keeping the brown peel and extraction of the entire coconut endosperm with the brown peel;
. Washing and drying and (or) dedusting of the coconut endosperm with the brown peel;
. Packing of the coconut endosperm with the brown peel into a hermetic package with vacuum or rarefied modified gas medium provided inside;
. Carrying out thermal processing of the packed coconut endosperm in a heater at a pressure not higher than 3.5 atmospheres and a temperature from 70 to 145 degrees Celsius during from 5 to 40 minutes, during which the brown peel fully or partially detaches from the surface of the coconut endosperm, and on the surface of the coconut endosperm coconut oil exudes and the protective oil film is formed.

. Another embodiment of the method of coconut endosperm preservation according to the invention is a method comprising, besides stages described above, a stage of boiling the shelled coconut endosperm in the boiling water for from 5 to 30 minutes, then the coconut endosperm is cooled or immediately packed in the hermetic package.

. This embodiment of the method of coconut endosperm preservation also provides a storage time of more than 6 months at storage temperature from 2 to 15 degrees Celsius, however the rejection rate related to endosperm explosion is much higher relative to other variants disclosed herein.

. All the embodiments of the solid coconut endosperm preservation methods disclosed above provide a storage period more than 6 months with compliance of storage conditions from 2 to 15 degrees Celsius, while retaining natural flavor and organoleptic properties of the coconut meat and coconut water.

### DETAILED DESCRIPTION

. For the goal of the present disclosure, the term "entire coconut endosperm", as well as "coconut endosperm", is understood as an entire solid spherical liner of a fresh coconut, entirely shelled (without the mesocarp) and which, depending on the embodiment of the invention, may be partially or fully covered with the brown peel (testa) or may have an entirely peeled white meat.

. The term "heater" in the present disclosure is understood as any heating device containing a heating means, as well as a cavity or a camera inside which a uniform distribution of supplied heat and achieving of temperature values in required ranges are provided. For achieving the technical result, in particular the following types of devices can be used as heaters:
. air, vapor, or water autoclaves, including household autoclaves, conveyor-type autoclaves;
. heated pots or other vessels with liquid and an embedded heating means or an external heat supply;
. household or industrial furnaces with different heating principles, including conveyor-type furnaces.

. The stage of coconut selection or quality control is recommended to enhance the stability of achieving the claimed technical result. The positioning and number of selection and/or quality control stages within the disclosed variants of the method for preserving the whole coconut endosperm are not of fundamental importance. The selection stage may be carried out either before or after coconut shelling, but prior to the packaging stage.

. For methods in which providing temperature conditions in the range from 70 to 100 degrees Celsius is necessary, as a heater it is advisable to use furnaces or heated pots with water, which provide heating in the required temperature range and at the same time are simple and available devices.

. For methods in which providing temperature conditions in the range from 100 to 145 degrees Celsius is necessary, as a heater it is advisable to use water or vapor autoclaves, which provide a uniform heating higher than 100 degrees Celsius. One chooses power and volume of the autoclave working camera based on the required performance.

. For coconut endosperm drying purposes, i.e., for eliminating moisture from the surface, depending on embodiments of disclosed methods, bulk or air drying can be used.

. For the purpose of shelling fresh coconuts, any means known from prior art can be used, which are used for these purposes, including shelling machines with a rotating disc, shelling machines with blades, shelling machines with rolls, etc. When a means or a method for coconut shelling is chosen, the approach in principle is keeping the integrity of the coconut endosperm, and for methods according to which the brown peel must be kept on the surface of the coconut endosperm, the means and methods of shelling must provide the maximum possible retention of the brown peel.

. According to embodiments of the present invention, depending on specific embodiments, a hermetic package can be any ready-to-use or fabricated during the technological process package made of vacuum and (or) barrier film.

. The hermetic package, depending on the embodiment of the invention, also can include containers, trays or substrates also made of vacuum or barrier material.

. Thermal effect conditions disclosed herein as indicated temperature and time intervals etc. are discovered in the result of multiple tests and experiments.

. Experiments within which indicated empirical data were obtained were held in the following way:
. Fresh, mature coconuts without visual defects on the shell were selected;
. Then the coconuts were shelled with keeping or further removal of the brown peel (testa);
. A part of shelled coconut endosperms was washed and dried, another part was wiped for elimination of dust and dirt;
. Then the coconut endosperms were put in polypropylene bags with 85 or 110 microns film density, then packed using two-chamber vacuum packing machine of Hualian 410 type;
. Then packed coconut endosperms were placed in a water autoclave with the volume of the working camera 120 liters and the power of 7.5 kilowatts, then thermal processing at different temperature, time and pressure conditions was held.
. Thus, in the result of the experiments held the following analytical data were obtained.
. The effect in the result of thermal processing at temperatures from 70 to 85 degrees Celsius:
. In the result of thermal processing of a packed coconut endosperm at a temperature from 70 to 85 degrees Celsius during a time interval from 5 to 15 minutes, the kernel of the coconut endosperm retains the maximum freshness, organoleptic properties are almost indistinguishable from a fresh coconut. The storage time is on average from 1 to 2 months at a storage temperature from 2 to 15 degrees Celsius;
. In the result of thermal processing of a packed coconut endosperm at a temperature from 70 to 85 degrees Celsius during a time interval from 15 to 30 minutes, the kernel of the coconut endosperm retains the maximum freshness, the meat becomes oilier, the film on the surface of the endosperm is formed, however not stably, organoleptic properties are almost indistinguishable from a fresh coconut. The storage time is on average from 2 to 4 months at a storage temperature of from 2 to 15 degrees Celsius;
. In the result of thermal processing of a packed coconut endosperm at a temperature from 70 to 85 degrees Celsius during a time interval from 30 to 60 minutes, the kernel of the coconut endosperm retains the maximum freshness, the meat becomes oilier, but the film on the surface of the endosperm is formed, however not stably, organoleptic properties are almost indistinguishable from a fresh coconut. The storage time is on average from 4 to 6 months at a storage temperature from 2 to 15 degrees Celsius;
. In the result of thermal processing of a packed coconut endosperm at a temperature higher than 85 degrees Celsius and during a time longer than 60 minutes, the moisture starts to exude, and respectively the rejection rate increases due to cases of explosion of packed coconut endosperms, at the same time when exceeding 90 minutes flavor and organoleptic properties of the meat and coconut water deteriorate.
. The effect in the result of thermal processing at temperatures from 85 to 100 degrees Celsius:
. In the result of thermal processing of a packed coconut endosperm at a temperature from 85 to 100 degrees Celsius during a time interval from 5 to 15 min, the kernel of the coconut endosperm retains freshness, the meat becomes significantly oilier, the oil film on the surface of the endosperm is formed, at the same time organoleptic properties are almost indistinguishable from a fresh coconut, the coconut water aroma becomes saturated obtaining a pronounced "milky" aroma. The storage time is on average from 4 to 6 months at a storage temperature from 2 to 15 degrees Celsius;
. In the result of thermal processing of a packed coconut endosperm at a temperature from 85 to 100 degrees Celsius during a time interval from 15 to 30 minutes, the kernel of the coconut endosperm retains freshness, the meat becomes significantly oilier, the oil film on the surface of the endosperm is formed, at the same time organoleptic properties are almost indistinguishable from a fresh coconut, the coconut water aroma becomes saturated obtaining a pronounced "milky" aroma. The storage time is more than 6 months at a storage temperature from 2 to 15 degrees Celsius;

. In the result of thermal processing of a packed coconut endosperm at a temperature from 85 to 100 degrees Celsius and during a time longer than 60 minutes, the moisture starts to exude, and respectively the rejection rate increases due to cases of explosion of packed coconut endosperms, as well as flavor and organoleptic properties of the meat and coconut water deteriorate.

. The effect in the result of thermal processing at temperatures from 100 to 145 degrees Celsius:
. In the result of thermal processing of a packed coconut endosperm at a temperature from 100 to 145 degrees Celsius during a time interval from 5 to 15 min, the kernel of the coconut endosperm retains freshness, the meat becomes significantly oilier, the oil film on the surface of the endosperm is formed, at the same time organoleptic properties are almost indistinguishable from a fresh coconut, the coconut water aroma becomes saturated obtaining a pronounced "milky" aroma. The storage time is more than 6 months at a storage temperature from 2 to 15 degrees Celsius;
. In the result of thermal processing of a packed coconut endosperm at a temperature from 100 to 145 degrees Celsius during a time interval from 15 to 30 minutes, the kernel of the coconut endosperm retains freshness, the meat becomes significantly oilier, fibers are insignificantly softened, the oil film on the surface of the endosperm is formed, at the same time organoleptic properties are almost indistinguishable from a fresh coconut, the coconut water aroma becomes saturated obtaining a pronounced "milky" aroma. The storage time is more than 6 months at a storage temperature from 2 to 15 degrees Celsius;
. In the result of thermal processing of a packed coconut endosperm at a temperature from 100 to 145 degrees Celsius during a time interval from 30 to 60 min, the kernel of the coconut endosperm retains freshness, the meat becomes significantly oilier, the oil film on the surface of the endosperm is formed, the meat becomes significantly softer, at the same time organoleptic properties are almost indistinguishable from a fresh coconut, the coconut water aroma becomes saturated obtaining a pronounced "milky" aroma. The storage time is more than 6 months at a storage temperature from 2 to 15 degrees Celsius;
. In the result of thermal processing of a packed coconut endosperm at a temperature from 100 to 145 degrees Celsius and during a time longer than 60 minutes, the moisture exudes, and respectively the rejection rate increases due to cases of explosion of packed coconut endosperms, as well as flavor and organoleptic properties of the meat and coconut water deteriorate.

. The effect in the result of thermal processing at temperatures higher than 145 degrees Celsius, product properties become unstable, coconut meat fibers start to brake down, the meat becomes soft and crumbly, moisture is exuded together with oil, the coconut endosperm loses its shape and integrity, the number of package explosions with coconut endosperms grows significantly.

. Thus, in the result of experiments it is established that for achieving the technical result consisting in the increase of the storage period of a product comprising a coconut endosperm packed into a hermetic package for more than 6 months, while retaining its natural flavor and organoleptic properties of the meat and coconut water, the temperature effect must be applied at temperatures from 70 to 145 degrees Celsius, during from 5 to 60 minutes, wherein the specific time of the thermal effect is chosen as a function of the chosen temperature value with inverse proportion within indicated ranges.

. In the result of the experiments held it is also established that depending on the kind, maturity, freshness of a coconut, humidity of the coconut meat, and substantially temperature and time of thermal processing of the coconut endosperm packed into a hermetic package, the thickness of the oil layer consists:
. In case of keeping the brown peel on the surface of the coconut endosperm before its packing and thermal processing - up to 20 microns;
. In case of removal of the brown peel from the surface of the coconut endosperm before its packing and thermal processing - up to 30 microns.

. The thickness of the oil layer was measured after extracting the coconut endosperm out of the hermetic package at the temperature of 15 degrees Celsius, which is the upper limit of storage thermal conditions for the production. Because of a high melting temperature of coconut oil from 23 to 25 degrees Celsius, the protective oil film created according to the present invention at the recommended storage temperature from 2 to 15 degrees Celsius forms a barely visible cover of set coconut oil.

. Also, it is discovered that the technical effect consisting in prolongation of the storage period of the product for more than 6 months becomes apparent when the thickness of the protective oil film exceeds 1 micron.

. According to the present invention, a fresh coconut endosperm can be packed into a vacuum package or into a package with modified gas atmosphere provided inside according to MAP (Modified Atmosphere Packaging) technology.

. Aspects of providing package processes of a coconut endosperm into a hermetic package, namely specific characteristics of packaging materials, the choice of the vacuum pressure as well as the composition of the replacing gas atmosphere are a manufacturing secret of the author and consequently are not disclosed herein.

. Examples of invention embodiments are shown below.

### EMBODIMENTS

### . Embodiment 1 (basic).

. Selecting a mature coconut with coconut water inside, without visible defects on its shell (clean eyes without visible signs of mold, the shell without darkening);
. Removing the hard shell from the coconut and extraction of the entire coconut endosperm. For shelling the coconut from the hard shell, one uses a blade coconut shelling machine;
. Removing the brown peel from the coconut endosperm with a vegetable peeler or a mechanical peeling device ;
. Washing of the extracted coconut endosperm with bubble and flow washing machines;
. Drying of the coconut endosperm with air conveyor dryers;
. Putting the coconut endosperm into a food bag of polypropylene, the bag is vacuumed and sealed with a vacuum packing machine, while the value of vacuum is set taking into account providing the integrity of the coconut endosperm;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which oil exudes on the coconut endosperm surface and the protective oil film is formed.

### . Embodiment 2.

. Selecting a mature coconut with coconut water inside, without visible defects on its shell (clean eyes without visible signs of mold, the shell without darkening);
. Removing the hard shell from the coconut keeping intact the brown peel and extraction of the entire coconut endosperm. For shelling the coconut from the hard shell, one uses a blade coconut shelling machine;
. Washing of the extracted coconut endosperm with bubble and flow washing machines;
. Drying of the coconut endosperm with air conveyor dryers;
. Putting the coconut endosperm into a food bag of polypropylene, the bag is vacuumed and sealed with a vacuum packing machine, while the value of vacuum is set taking into account providing the integrity of the coconut endosperm;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which the brown peel detaches from the coconut endosperm, and coconut oil exudes on the coconut endosperm surface, of which the protective oil film covering the coconut endosperm is formed.

### . Embodiment 3.

. Selecting a mature coconut with coconut water inside, without visible defects on its shell (clean eyes without visible signs of mold, the shell without darkening);
. Removing the hard shell from the coconut, extraction of the entire coconut endosperm. For shelling the coconut from the hard shell, one uses a blade coconut shelling machine;
. Removing the brown peel from the coconut endosperm with a vegetable peeler or a mechanical peeling device;
. Washing of the extracted coconut endosperm with bubble and flow washing machines;
. Drying of the coconut endosperm with air conveyor dryers;
. Placing the coconut endosperm into a barrier vacuum bag of multiple-layer film, further placing into a sealer hermetic chamber, evacuating air from the bag, pumping in a mixture of inert gases;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which oil exudes on the coconut endosperm surface and the protective oil film is formed.

### . Embodiment 4.

. Selecting a mature coconut with coconut water inside, without visible defects on its shell (clean eyes without visible signs of mold, the shell without darkening);
. Removing the hard shell from the coconut keeping intact the brown peel and extraction of the entire coconut endosperm. For shelling the coconut from the hard shell, one uses a blade coconut shelling machine;
. Washing of the extracted coconut endosperm with bubble and flow washing machines;
. Drying of the coconut endosperm with air conveyor dryers;
. Placing the coconut endosperm into a barrier vacuum bag of multiple-layer film, further placing into a sealer hermetic chamber, evacuating air from the bag, pumping in a mixture of inert gases;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which the brown peel detaches from the coconut endosperm, and coconut oil exudes on the coconut endosperm surface, of which the protective oil film covering the coconut endosperm is formed.

### . Embodiment 6.

. Selecting a mature coconut with coconut water inside, without visible defects on its shell (clean eyes without visible signs of mold, the shell without darkening);
. Removing the hard shell from the coconut, extraction of the entire coconut endosperm. For shelling the coconut from the hard shell, one uses a blade coconut shelling machine;
. Removing the brown peel from the coconut endosperm with a vegetable peeler or a mechanical peeling device;
. Placing the shelled coconut endosperm into a vessel with hot water at the temperature of 85 degrees Celsius, bringing water to the boil and keeping the coconut endosperm in boiling water for 10 minutes;
. Further cooling of the coconut endosperm with water in a cooling conveyor to a temperature from 25 to 30 degrees Celsius;
. Washing of the coconut endosperm with bubble and flow washing machines;
. Drying of the coconut endosperm with air conveyor dryers;
. Putting the coconut endosperm into a food bag of polypropylene, the bag is vacuumed and sealed with a vacuum packing machine, while the value of vacuum is set taking into account providing the integrity of the coconut endosperm;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which oil exudes on the coconut endosperm surface and the protective oil film is formed.

### . Embodiment 7.

. Selecting a mature coconut with coconut water inside, without visible defects on its shell (clean eyes without visible signs of mold, the shell without darkening);
. Removing the hard shell from the coconut, extraction of the entire coconut endosperm. For shelling the coconut from the hard shell, one uses a blade coconut shelling machine;
. Removing the brown peel from the coconut endosperm with a vegetable peeler or a mechanical peeling device;
. Placing the shelled coconut endosperm into a vessel with hot water at the temperature of 85 degrees Celsius, bringing water to the boil and keeping the coconut endosperm in boiling water for 10 minutes;
. Further cooling of the coconut endosperm with water in a cooling conveyor to a temperature from 25 to 30 degrees Celsius;
. Washing of the coconut endosperm with bubble and flow washing machines;
. Drying of the coconut endosperm with air conveyor dryers;
. Placing the coconut endosperm into a barrier vacuum bag of multiple-layer film, further placing into a sealer hermetic chamber, evacuating air from the bag, pumping in a mixture of inert gases;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which oil exudes on the coconut endosperm surface and the protective oil film is formed.

### . Embodiment 8.

. Selecting a mature coconut with coconut water inside, without visible defects on its shell (clean eyes without visible signs of mold, the shell without darkening);
. Shelling the coconut from the hard shell while keeping intact the brown peel, extracting of the coconut endosperm, doing this for shelling the coconut from the hard shell one uses a blade coconut shelling machine;
. Placing the shelled coconut endosperm into a vessel with hot water at the temperature of 85 degrees Celsius, bringing water to the boil and keeping the coconut endosperm in boiling water for 10 minutes;
. Further cooling of the coconut endosperm with water in a cooling conveyor to a temperature from 25 to 30 degrees Celsius;
. Washing of the coconut endosperm with bubble and flow washing machines;
. Drying of the coconut endosperm with air conveyor dryers;
. Putting the coconut endosperm into a food bag of polypropylene, the bag is vacuumed and sealed with a vacuum packing machine, while the value of vacuum is set taking into account providing the integrity of the coconut endosperm;
. Further placing of the packed coconut endosperm into a water autoclave with working camera volume of 300 liters, as well as power of 12.5 kilowatts and provided pressure of 3 atmospheres, carrying out thermal processing with a temperature and processing time set according to the invention, during which the brown peel detaches from the coconut endosperm, and coconut oil exudes on the coconut endosperm surface, of which the protective oil film covering the coconut endosperm is formed.

### . Embodiment 9.

. Selecting a mature coconut with coconut water inside, without visible defects on its shell (clean eyes without visible signs of mold, the shell without darkening);
. Removing the hard shell from the coconut keeping intact the brown peel and extraction of the entire coconut endosperm. For shelling the coconut from the hard shell, one uses a blade coconut shelling machine;
. Placing the shelled coconut endosperm into a vessel with hot water at the temperature of 85 degrees Celsius, bringing water to the boil and keeping the coconut endosperm in boiling water for 10 minutes;
. Further cooling of the coconut endosperm with water in a cooling conveyor to a temperature from 25 to 30 degrees Celsius;
. Washing of the coconut endosperm with bubble and flow washing machines;
. Drying of the coconut endosperm with air conveyor dryers;
. Placing the coconut endosperm into a barrier vacuum bag of multiple-layer film, further placing into a sealer hermetic chamber, evacuating air from the bag, pumping in a mixture of inert gases;
. Further placing of the packed coconut endosperm into a water autoclave with working camera volume of 120 liters, as well as power of 7.5 kilowatts and provided pressure of 3 atmospheres, carrying out thermal processing with a temperature and processing time set according to the invention, during which the brown peel detaches from the coconut endosperm, and coconut oil exudes on the coconut endosperm surface, of which the protective oil film covering the coconut endosperm is formed.

## Claims

1. A product comprising an entire coconut endosperm, said entire coconut endosperm is packed into an artificial flexible hermetic package inside which vacuum or rarefaction is provided, wherein the surface of the coconut endosperm is covered with a natural oil film of coconut oil exuded in the result of thermal processing of coconut oil;

2. The product comprising an entire coconut endosperm according to claim 1, wherein the thickness of the oil film covering the coconut endosperm is in the range from 1 to 30 microns;

3. The product comprising an entire coconut endosperm, said entire coconut endosperm is packed into an artificial flexible hermetic package inside which vacuum or rarefaction is provided, wherein the coconut endosperm is fully or partially covered with a brown peel, as well as with a natural oil film of coconut oil exuded in the result of thermal processing of coconut oil.

4. The product comprising an entire coconut endosperm according to claim 1, wherein the thickness of the oil film covering the coconut endosperm is in the range from 1 to 20 microns;

5. A method of preservation of an entire coconut endosperm comprising the following stages:
(a) selecting a mature coconut without visible defects;
(b)removing the hard shell from the coconut and extraction of the entire coconut endosperm;
(c)removing the brown peel from the coconut endosperm;
(d)washing and drying and (or) dedusting of the coconut endosperm;
(e)packing of the coconut endosperm into a hermetic package with vacuum or rarefied modified gas medium provided inside;
(f) carrying out thermal processing of the packed coconut endosperm in a heater at a pressure not higher than 3.5 atmospheres and a temperature from 70 to 145 degrees Celsius while thermal processing time is chosen within the range from 5 to 60 minutes, considering that time is a function of temperature with inverse proportion.

6. The method of preservation of an entire coconut endosperm according to claim 5, wherein the brown peel is kept on the surface of the coconut endosperm.
